# EUROPÄISCHE PATENTANMELDUNG

(11) **EP 2 927 633 A1**
(43) Veröffentlichungstag der Anmeldung: **07.10.2015**
(21) Anmeldenummer: 14405088.7
(22) Anmeldetag: 17.11.2014
(51) Int. Cl.: G01B 3/04, B43L 7/14, G01B 3/34, G01B 5/207

(54) **Messvorrichtung zum gleichzeitigen Messen wenigstens eines ersten und eines, insbesondere hierzu orthogonalen, zweiten Längenmasses**

(30) Priorität: 02.04.2014 CH 5092014
(71) Anmelder: Griesser Holding AG, 8355 Aadorf (CH)
(72) Erfinder: Meier, Erwin, CH-6710 Nenzing (CH)
(74) Vertreter: Gachnang, Hans Rudolf

(57) **Zusammenfassung**

Die Erfindung betrifft eine Messvorrichtung (1) zum gleichzeitigen Messen wenigstens eines ersten und eines, insbesondere hierzu orthogonalen, zweiten Längenmaßes (A; B), insbesondere zum gleichzeitigen Messen des Abstandes eines Klobens (64) zur Seitenkante (61) und zur Hinterkante (62) eines Tür- oder Fensterladenfalzes (60), mit einem ersten Maßstab (10) zum Messen des ersten Längenmaßes (A), einem zweiten Maßstab (20) zum Messen des zweiten Längenmaßes (B) und einer am ersten Maßstab (10) fest ausgebildeten Führungseinrichtung (30), mittels welcher der zweite Maßstab (20) entlang seiner Messachse (21) unter Einschluss eines von Null verschiedenen, vorzugsweise rechten, Winkels (α) zur Messachse (11) des ersten Maßstabes (10) geführt verschiebbar ist.

## Beschreibung

Die Erfindung betrifft eine Messvorrichtung zum gleichzeitigen Messen wenigstens eines ersten und eines, insbesondere hierzu orthogonalen, zweiten Längenmaßes, insbesondere zum gleichzeitigen Messen des Abstandes eines Klobens zur Seitenkante und zur Hinterkante eines Tür- oder Fensterladenfalzes.

Bei der Montage oder dem Ersatz von Tür- oder Fensterläden ist es zwingend erforderlich, die genaue Position des Klobens, einem zumeist L-förmigen Verbindungselement, mit dem Tür- und Fensterläden bzw. Tore an der Gebäudewand oder an einem Pfosten schwenkbar angebracht werden, relativ zur räumlichen Struktur der Tür- oder Fensterlaibung auszumessen. Von besonderer Bedeutung ist dabei zum einen der seitliche Abstand der Klobenachse zur Seitenkante des Tür- oder Fensterladenfalzes und zum anderen der senkrechte Abstand der Klobenachse zur Hinterkante des Tür- oder Fensterladenfalzes. Die Erfassung dieser beiden Längenmaße erfolgt typischerweise separat und nacheinander mittels eines gewöhnlichen Meterstabes oder Lineals.

Da die Klobenachse funktionsbedingt von der Gebäudewand absteht, gestaltet sich die Messung der zuvor genannten Längenmaße zumeist schwierig. So entspricht etwa der seitliche Abstand der Klobenachse zur Seitenkante des Ladenfalzes nicht dem direkten Abstand der Klöbenachse zur Seitenkante, sondern vielmehr der orthogonalen Projektion auf die Wandfläche. Dieses Maß lässt sich jedoch mit einem gewöhnlichen Meterstab oder Lineal entweder nur per Augenpeilung bestimmen oder unter zu Hilfenahme eines Zusatzwerkzeuges, etwa eines Winkels oder eines weiteren Maßstabes, der als Projektionsachse an die Seitenkante oder den Kloben angelegt wird. Gleiches gilt für den senkrechten Abstand der Klobenachse zur Hinterkante des Ladenfalzes. Erfahrungsgemäß gestaltet sich eine derartige Messung zeitlich wie technisch sehr aufwendig. Mitunter ist das Messergebnis sehr ungenau.

Dieses Messproblem tritt im Übrigen nicht nur bei der Bemaßung der Klobenachse zur Seiten- und Hinterkante eines Tür- oder Fensterladenfalzes auf, sondern überall dort, wo nicht der direkte Abstand, sondern wenigstens zwei, zumeist orthogonale, Projektionsabstände zwischen zwei Punkten erfasst werden sollen.

Aufgabe der vorliegenden Erfindung ist es daher, eine Messvorrichtung anzugeben, die ein gleichzeitiges, einfaches und möglichst genaues Messen wenigstens eines ersten und eines, insbesondere hierzu orthogonalen, zweiten Längenmaßes ermöglicht, beispielsweise das gleichzeitige Messen des Abstandes eines Klobens zur Seitenkante und zur Hinterkante eines Tür- oder Fensterladenfalzes.

Diese Aufgabe wird durch eine Messvorrichtung gemäß Anspruch 1 gelöst. Vorteilhafte Ausgestaltungen der Erfindung sind Gegenstand der Unteransprüche.

Die erfindungsgemäße Messvorrichtung zeichnet sich dadurch aus, dass ein erster Maßstab zum Messen des ersten Längenmaßes, ein zweiter Maßstab zum Messen des zweiten Längenmaßes und eine am ersten Maßstab fest ausgebildete Führungseinrichtung vorgesehen sind, mittels welcher der zweite Maßstab entlang seiner Messachse unter Einschluss eines von Null verschiedenen, vorzugsweise rechten, Winkels zur Messachse des ersten Maßstabes geführt verschiebbar ist.

In erfindungsgemäßer Weise wurde erkannt, dass durch eine fest ausgebildete Führungseinrichtung am ersten Maßstab eine stabile und reproduzierbare Verschiebbarkeit des zweiten Maßstabes relativ zum ersten Maßstab ermöglicht wird, so dass während des Verschiebens ein feste Winkelrelation zwischen den beiden Maßstäben aufrecht erhalten werden kann. Der eingeschlossene Winkel zwischen den beiden Maßstäben ist dabei so gewählt, dass er dem von den beiden zu messenden Längenmaßen eingeschlossenen Winkel entspricht. Hierzu sind der erste und der zweite Maßstab bevorzugt kreuzförmig überlagert.

Das gleichzeitige Messen der beiden Längenmaße kann beispielsweise derart erfolgen, dass zunächst der erste Maßstab an das erste zu messende Längenmaß angelegt, so dann die gesamte Messvorrichtung parallel zum ersten Längenmaß verschoben wird, bis der zweite Maßstab mit dem zweiten zu messenden Längenmaß fluchtet, und schließlich die Längenskala des zweiten Maßstabs durch geführtes Verschieben an das zweite zu messende Längenmaß angeglichen wird. Dabei wird der zweite Maßstab mit Hilfe der Führungseinrichtung solange verschoben, bis der Nullpunkt seiner Längenskala mit einem Ende des zu messenden Längenmaßes überlagert ist. Auf diese Weise lassen sich dann an den beiden Maßstäben die zu ermittelnden Längenmaße in einfacher Weise gleichzeitig ablesen.

Die Messvorrichtung kann aber selbstverständlich auch in anderer Weise an die zu messenden Längenmaße adaptiert werden. So ist es etwa im eingangs geschilderten Anwendungsfall für das Ausmessen der Abstände der Klobenachse zur Seiten- und Hinterkante eines Tür- oder Fensterladenfalzes denkbar dass zunächst der zweite Maßstab mit einer seiner Längskanten parallel an die Seitenkante des Ladenfalzes angelegt und bis an die Hinterkante des Ladenfalzes geschoben wird. Sodann kann der erste Maßstab mittels der Führungseinrichtung relativ zum zweiten Maßstab entlang dessen Messachse, d.h. senkrecht zur Gebäudewand bzw. parallel zur Seitenkante des Ladenfalzes, solange verschoben werden, bis die der Gebäudewand zugewandte Längskante des ersten Maßstabes deckungsgleich mit der Klobenachse fluchtet. Hierzu ist die Führungseinrichtung so ausgebildet bzw. eingestellt, dass der eingeschlossene Winkel zwischen den beiden Maßstäben dem eingeschlossenen Winkel zwischen der Gebäudewand und der Seitenkante des Ladenfalzes entspricht. Typischerweise beträgt dieser Winkel 90°.

Im Ergebnis lassen sich dann an beiden Maßstäben die zu ermittelnden Längenmaße, nämlich die Abstände des Klobens zur Seitenkante und zur Hinterkante des Ladenfalzes, gleichzeitig ablesen. Aufgrund der festen und wohl definierten Führung zwischen dem ersten und zweiten Maßstab ist die Messung sehr genau und im Übrigen gut reproduzierbar. Dabei entspricht der Abstand des Klobens zur Hinterkante des Falzes dem am zweiten Maßstab abzulesenden Längenmaß, beginnend an jenem Stabende, das an der Hinterwand anliegt, bis zum Schnittpunkt des zweiten Maßstabes mit der oben genannten Längskante des ersten Maßstabes. Entsprechend ergibt sich der Abstand des Klobens zur Seitenkante des Ladenfalzes aus dem abzulesenden Längenmaß am ersten Maßstab, beginnend an dessen Schnittpunkt mit dem zweiten Maßstab bis zur dessen Schnittpunkt mit der Klobenachse.

Bevorzugt weist der zweite Maßstab eine entlang seiner Messachse durchgehende Längenskala auf, deren Ursprung an einem Ende des Maßstabes beginnt. Besonders bevorzugt ist an beiden Längsachsen des zweiten Maßstabes eine durchgehende Längenskala ausgebildet.

Demgegenüber weist der erste Maßstab bevorzugt wenigstens über einen Teilbereich einer seiner Längskanten eine Längenskala auf, die im Schnittpunkt dieses Teilbereichs mit einer der Längskanten des zweiten Maßstabes beginnt und sich von dort aus zum freien Ende des ersten Maßstabes fortsetzt.

Nach einer besonders bevorzugten Ausführungsform der Erfindung weist der erste Maßstab an wenigstens einer Längskante zwei bezüglich der Führungseinrichtung spiegelsymmetrische Längenskalen auf, deren jeweiliger Ursprung deckungsgleich mit dem Schnittpunkt jener Längskante mit einer der Längskanten des geführten zweiten Maßstabes ist. Hierdurch ist die Messvorrichtung spiegelsymmetrisch verwendbar, kann also etwa zur Vermessung des linken und des rechten Ladenfalzes einer Tür- oder Fensteröffnung verwendet werden.

Die Längenskalen der beiden Maßstäbe können in metrischen Maßeinheiten und/oder Zollmaßeinheiten ausgebildet sein. Auch die Unterteilung bzw. Feinheit der Längenskalen kann an die zu messenden Längenmaße angepasst sein. Bevorzugt ist eine Millimeter-Skalierung vorgesehen.

Nach einer weiteren vorteilhaften Ausgestaltung ist es vorgesehen, dass der zweite Maßstab zum Zerlegen der Messvorrichtung der Führungseinrichtung vollständig entnehmbar ist. Hierdurch lässt sich die Messvorrichtung sehr platzsparend versorgen. Außerdem kann der entnehmbare zweite Maßstab hierdurch auch anderweitig als Messwerkzeug unabhängig vom ersten Maßstab verwendet werden.

Gemäß einer weiteren bevorzugten Ausführungsform der Erfindung sind der erste und/oder der zweite Maßstab linealförmig ausgebildet. Um eine sehr kostengünstige Messvorrichtung zu erlangen, kann es in besonders vorteilhafter Weise vorgesehen sein, dass wenigstens einer der Maßstäbe, insbesondere der zweite Maßstab, als Standardlineal ausgebildet ist, beispielsweise als Stahlineal.

Eine technisch sehr einfach und leicht herzustellende Führungseinrichtung kann gemäß einer weiteren vorteilhaften Ausgestaltung der Erfindung dadurch realisiert werden, dass die Führungseinrichtung als eine parallel zur Messrichtung des zweiten Maßstabes vorlaufende Nut im ersten Maßstab ausgebildet ist. Dabei entspricht vorzugsweise die Breite der Nut im Wesentlichen der Breite des zweiten Maßstabes, so dass der zweite Maßstab eng anliegend bzw. satt in der Nut geführt ist. Im gleichen Maße kann die Tiefe der Nut im Wesentlichen der Höhe bzw. Dicke des zweiten Maßstabes entsprechen.

Um eine sichere und sehr bedienerfreundliche, insbesondere einhändige Bedienung der Messvorrichtung zu gewährleisten, ist es gemäß einer weiteren vorteilhaften Ausführungsform der Erfindung vorgesehen, dass der zweite Maßstab unter Beibehaltung der Verschiebbarkeit gegenüber dem ersten Maßstab mit einem Haltemittel an der Führungseinrichtung gelagert ist. Hierdurch wird erreicht, dass der zweite Maßstab nur entlang seiner Messachse verschoben werden kann, während er in allen anderen Raumrichtungen durch die Führungseinrichtung und das Haltemittel festgelegt ist.

Beispielsweise kann das Haltemittel als eine dünne Platte oder als ein dünnes Blech ausgebildet sein, das die Nut der Führungseinrichtung überdeckt und am ersten Maßstab, beispielsweise mittels einer Schraub-, Niet- oder Klebeverbindung festgelegt ist. Die Platte bzw. das Blech kann zusätzlich in einer Einsenkung im ersten Maßstab eingelegt sein und mit dessen Oberfläche bündig abschließen.

Ferner ist es denkbar, dass der zweite Maßstab über das Haltmittel verliersicher am ersten Maßstab gelagert ist, etwa beispielsweise dadurch, dass einerseits die Höhe bzw. Dicke des zweiten Maßstabes geringfügig größer als das entsprechende lichte Maß der mit einer Platte oder einem Blech überdeckten Nut der Führungseinrichtung gewählt ist und andererseits die Platte oder das Blech in Richtung der Nutvertiefung federelastische Eigenschaften ausweist, so dass der in die Nut eingeführte zweite Maßstab die Platte bzw. das Blech leicht ausgelenkt und dadurch aufgrund der rücktreibenden Federkraft reibschlüssig in der Nut festgeklemmt wird. Die Klemmkraft ist jedoch bevorzugt nur so stark ausgelegt, dass der zweite Maßstab noch bei moderatem Kraftaufwand entlang der Nut verschoben werden kann.

Zum Erfassen des Klobendurchmessers weist die Messvorrichtung nach einer weiteren vorteilhaften Ausgestaltung der Erfindung zusätzlich mehrere Durchmesser-Lehren unterschiedlicher Durchmessergrößen auf.

Bevorzugt sind die mehreren Durchmesser-Lehren entweder am ersten Maßstab oder am zweiten Maßstab angeordnet. In vorteilhafter Weise sind die Lehren als im Wesentlichen kreissegmentförmige Bleche oder Platten ausgebildet, in denen ein Loch als Lehre ausgebildet ist. Insbesondere ist es denkbar, dass ein derartiger Lehren-Satz drehbar und/oder auffächerbar an einem der beiden Maßstäbe angeordnet ist. Denkbar ist aber auch, dass die verschiedenen Lehren als Durchgangslöcher in wenigstens einem der beiden Maßstäbe ausgebildet sind.

Nach einer weiteren vorteilhaften Ausgestaltung der Erfindung ist es vorgesehen, dass der erste Maßstab und/oder der zweite Maßstab und/oder die mehreren Durchmesser-Lehren aus Metall, insbesondere Stahl oder Aluminium, oder alternativ aus Kunststoff, insbesondere einem polymeren Kunststoff, bestehen.

Weitere Ziele, Vorteile, Merkmale und Anwendungsmöglichkeiten der vorliegenden Erfindung ergeben sich aus der nachfolgenden Beschreibung eines Ausführungsbeispiels und anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt:
- Fig. 1: mögliches Ausführungsbeispiel einer erfindungsgemäßen Messvorrichtung in Draufsicht;
- Fig. 2: Schnitt durch die Messvorrichtung entlang der Schnittlinie C-C gemäß Fig. 1,
- Fig. 3: Anwendungsbeispiel für die erfindungsgemäße Messvorrichtung zum gleichzeitigen Messen des Abstandes eines Klobens zur Seitenkante und Hinterkante eines Tür- oder Fensterladenfalzes,
- Fig. 4: Messvorrichtung gemäß Fig. 1 im Anwendungsbeispiel gemäß Fig. 3, und
- Fig. 5: Messvorrichtung gemäß Fig. 1 in einem weiteren Anwendungsbeispiel gemäß Fig. 3.

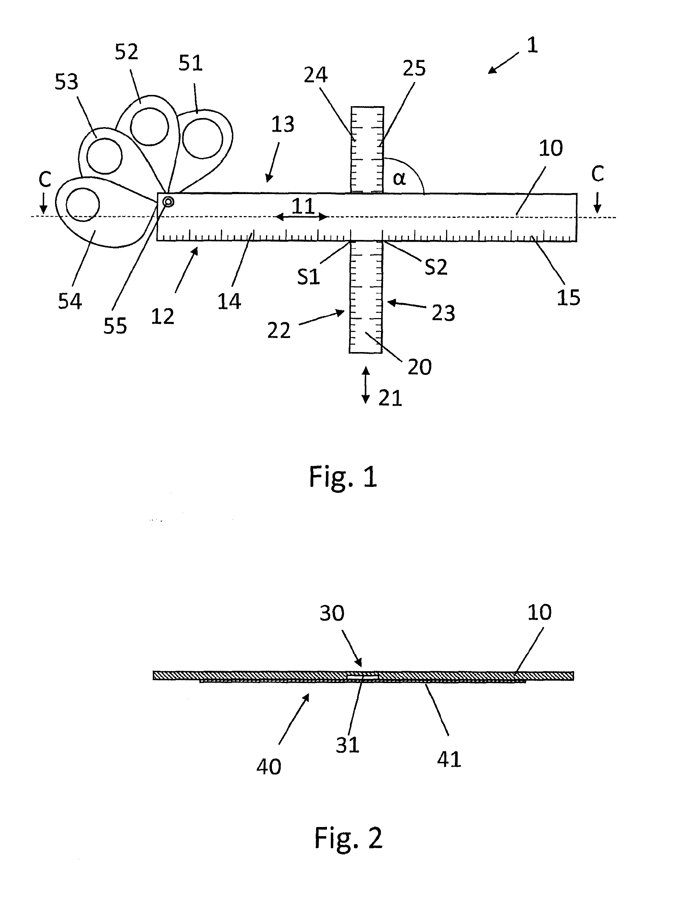

Die Fig. 1, 2, 4 und 5 zeigen ein mögliches Ausführungsbeispiel einer erfindungsgemäßen Messvorrichtung 1 zum gleichzeitigen Messen wenigstens eines ersten und eines, insbesondere hierzu orthogonalen, zweiten Längenmaßes A, B. Die Messvorrichtung 1 weist einen ersten linealförmigen Maßstab 10 zum Messen des ersten Längenmaßes A und einen zweiten linealförmigen Maßstab 20 zum Messen des zweiten Längenmaßes B auf. Ferner ist eine am ersten Maßstab 10 fest ausgebildete Führungseinrichtung 30 vorgesehen, mittels welcher der zweite Maßstab 20 entlang seiner Messachse 21 unter Einschluss eines von Null verschiedenen, vorliegend rechten, Winkels α zur Messachse 11 des ersten Maßstabes 10 geführt verschiebbar ist.

Dabei weist der zweite Maßstab 20 entlang seiner Messachse 21, vorliegend beidseitig an beiden Längskanten 22, 23, jeweils eine durchgehende Längenskala 24, 25 auf, deren Ursprung an einem Ende des Maßstabes 20 beginnt. Demgegenüber weist der erste Maßstab 10 an einer seiner beiden Längskanten 12, 13, hier der Längskante 12, zwei bezüglich der Führungseinrichtung 30 spiegelsymmetrische Längenskalen 14, 15 auf, deren jeweiliger Ursprung deckungsgleich mit dem Schnittpunkt S1 bzw. S2 der Längskante 12 mit der Längskante 22 bzw. 23 des geführten zweiten Maßstabes 20 ist. Hierdurch ist die Messvorrichtung 1 in vorteilhafter Weise spiegelsymmetrisch verwendbar.

Wie insbesondere Fig. 2 zu entnehmen ist, ist die Führungseinrichtung 30 im vorliegenden Ausführungsbeispiel als eine parallel zur Messrichtung 21 des zweiten Maßstabes 20 vorlaufende Nut 31 im ersten Maßstab 10 ausgebildet. Dabei entspricht die Breite der Nut 31 im Wesentlichen der Breite des zweiten Maßstabes 20, so dass der zweite Maßstab 20 eng anliegend bzw. satt in der Nut 31 geführt ist.

Um eine sichere und sehr bedienerfreundliche Handhabung der Messvorrichtung 1 zu gewährleisten, ist der zweite Maßstab 20 unter Beibehaltung der Verschiebbarkeit gegenüber dem ersten Maßstab 10 außerdem mit einem Haltemittel 40 an der Führungseinrichtung 30 gelagert. Hierdurch wird erreicht, dass der zweite Maßstab 20 nur entlang seiner Messachse 21 verschoben werden kann, während er in allen anderen Raumrichtungen durch die Führungseinrichtung 30 und das Haltemittel 40 festgelegt ist.

Im vorliegenden Ausführungsbeispiel ist das Haltemittel 40 als ein dünnes längliches Blech 41 ausgebildet sein, das die Nut 31 der Führungseinrichtung 30 überdeckt und am ersten Maßstab festgeklebt ist. Im Übrigen ist der zweite Maßstab 20 über das Haltmittel 40 verliersicher am ersten Maßstab 10 gelagert, nämlich dadurch, dass einerseits die Höhe bzw. Dicke des zweiten Maßstabes 20 geringfügig größer als das entsprechende lichte Maß der mit dem Blech 41 überdeckten Nut 31 gewählt ist, und andererseits dadurch, dass das Blech 41 in Richtung der Nutvertiefung federelastische Eigenschaften ausweist, so dass der in die Nut 31 eingeführte zweite Maßstab 20 das Blech 41 leicht ausgelenkt und aufgrund der rücktreibenden Federkraft reibschlüssig in der Nut 31 festgeklemmt wird. Die Klemmkraft ist jedoch nur so stark ausgelegt, dass der zweite Maßstab 20 noch bei moderatem Kraftaufwand entlang der Nut 31 verschoben werden kann.

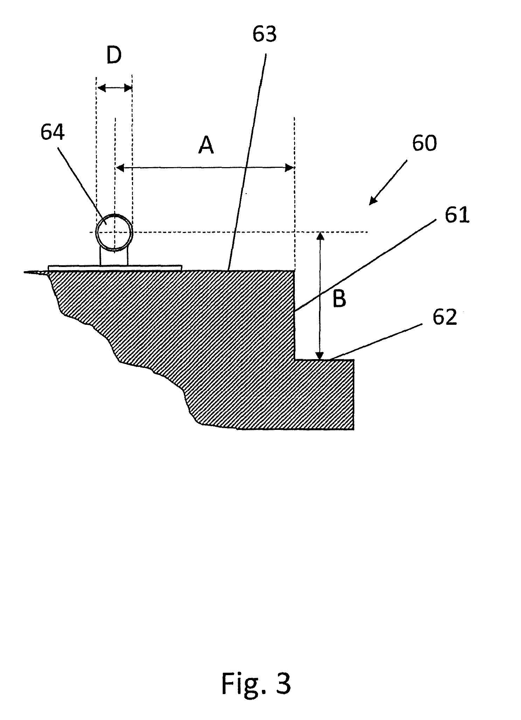

Fig. 3 zeigt ein bevorzugtes Anwendungsbeispiel der erfindungsgemäßen Messeinrichtung, nämlich das gleichzeitige Messen der Abstände A und B eines an einer Gebäudewand 63 befestigten Klobens 64 zur Seitenkante 61 und Hinterkante 62 eines Tür- oder Fensterladenfalzes 60.

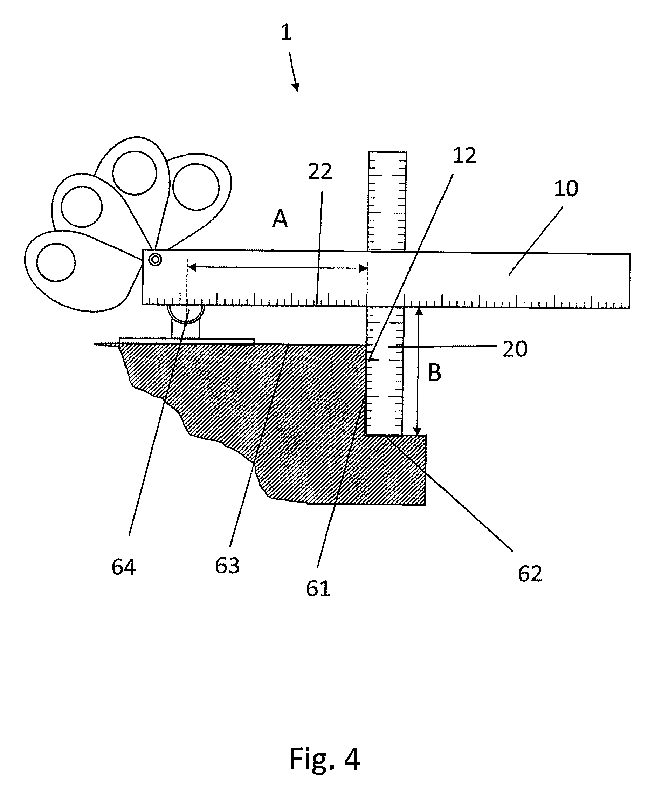

Fig. 4 zeigt die Anwendung der erfindungsgemäßen Messeinrichtung 1 für das bauliche Beispiel gemäß Fig. 3. So kann das gleichzeitige Ausmessen der Abstände A und B des Klobens 64 zur Seitenkante 61 und zur Hinterkante 62 des Tür- oder Fensterladenfalzes 60 dadurch erfolgen, dass zunächst der zweite Maßstab 20 mit seiner Längskante 22 parallel an die Seitenkante 61 des Ladenfalzes 60 angelegt und bis an die Hinterkante 62 geschoben wird. Sodann kann der erste Maßstab 10 mittels der Führungseinrichtung 30 relativ zum zweiten Maßstab 20 entlang dessen Messachse 21, d.h. senkrecht zur Gebäudewand 63 bzw. parallel zur Seitenkante 61, solange verschoben werden, bis die der Gebäudewand 63 zugewandte Längskante 12 des ersten Maßstabes 10 deckungsgleich mit der Mittelachse des zylindrischen Klobens 64 fluchtet. Entsprechend ist die Führungseinrichtung 30 so ausgebildet, dass der eingeschlossene Winkel α zwischen den beiden Maßstäben 10 und 20 dem eingeschlossenen Winkel zwischen der Gebäudewand 63 und der Seitenkante 61 des Ladenfalzes 60 entspricht. Vorliegend beträgt dieser Winkel 90°. Im Ergebnis lassen sich dann an beiden Maßstäben 10, 20 die zu ermittelnden Längenmaße A und B gleichzeitig ablesen. Aufgrund der festen und wohl definierten Führung zwischen dem ersten und zweiten Maßstab ist die Messung sehr genau und im Übrigen gut reproduzierbar.

Die verliersichere Lagerung des zweiten Maßstabes 20 in der Führungseinrichtung 30 erlaubt es darüber hinaus, die Messeinrichtung 1 nach dem Adaptieren an die Geometrie des Ladenfalzes 60 und dem Ablesen des ersten Längenmaßes A vom Ladenfalz 60 abzunehmen, um anschließend das zweite Längenmaß B am zweiten Maßstab 20 besser ablesen zu können.

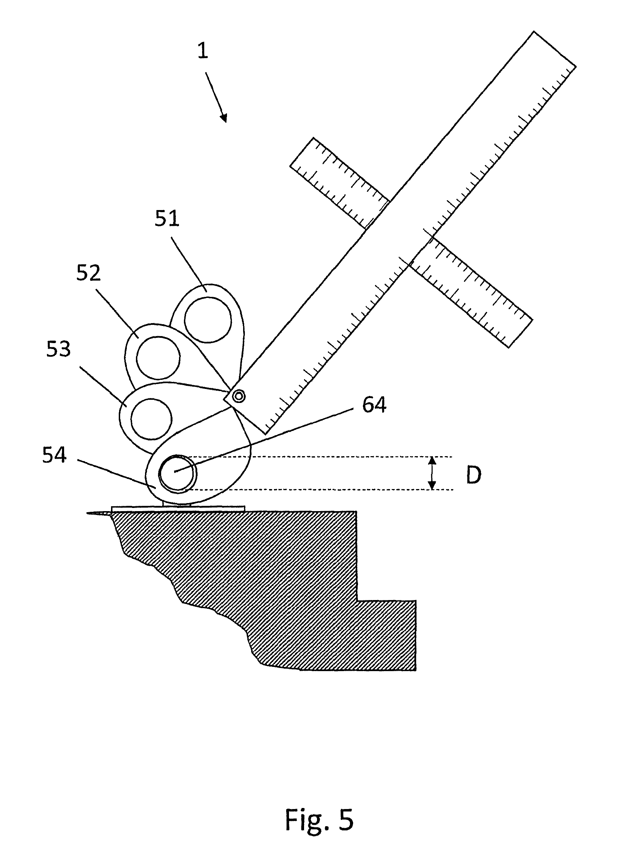

Zum Erfassen des Klobendurchmessers D weist die Messvorrichtung 1 - wie insbesondere Fig. 1 und 5 zu entnehmen ist - zusätzlich mehrere Durchmesser-Lehren 51, 52, 53, 54 unterschiedlicher Durchmessergrößen auf. Diese sind im vorliegenden Ausführungsbeispiel als im Wesentlichen kreissegmentförmige Bleche 51, 52, 53, 54 ausgebildet, in denen je ein Loch mit einem definierten Durchmessermaß ausgebildet ist. In vorteilhafter Weise sind die diversen Bleche 51, 52, 53, 54 als auffächerbarer Lehren-Satz drehbar in einem Eckbereich des ersten Maßstabs 10 mit Hilfe einer Schraubverbindung 55 angeordnet. Hierdurch können die Durchmesser-Lehren - wie in Fig. 5 gezeigt- leicht zugänglich auf den Kloben 64 aufgesetzt werden, um dessen Durchmesser D zu bestimmen.

### Bezugszeichenliste

- 1: Messvorrichtung

- 10: erster Maßstab
- 11: Messachse
- 12: Längskante
- 13: Längskante
- 14: Längenskala
- 15: Längenskala

- 20: zweiter Maßstab
- 21: Messachse
- 22: Längskante
- 23: Längskante
- 24: Längenskala
- 25: Längenskala

- 30: Führungseinrichtung
- 31: Nut

- 40: Haltemittel
- 41: Blech

- 51: Durchmesser-Lehre
- 52: Durchmesser-Lehre
- 53: Durchmesser-Lehre
- 54: Durchmesser-Lehre
- 55: Schraubverbindung

- 60: Tür-oder Fensterladenfalz
- 61: Seitenkante

- 62: Hinterkante
- 63: Gebäudewand
- 64: Kloben

- S1: Schnittpunkt
- S2: Schnittpunkt
- A: erstes Längenmaß
- B: zweites Längenmaß
- D: Durchmesser des Kloben
- α: Winkel

## Patentansprüche

1. Messvorrichtung (1) zum gleichzeitigen Messen wenigstens eines ersten und eines, insbesondere hierzu orthogonalen, zweiten Längenmaßes (A; B), insbesondere zum gleichzeitigen Messen des Abstandes eines Klobens (64) zur Seitenkante (61) und zur Hinterkante (62) eines Tür- oder Fensterladenfalzes (60), mit einem ersten Maßstab (10) zum Messen des ersten Längenmaßes (A), einem zweiten Maßstab (20) zum Messen des zweiten Längenmaßes (B) und einer am ersten Maßstab (10) fest ausgebildeten Führungseinrichtung (30), mittels welcher der zweite Maßstab (20) entlang seiner Messachse (21) unter Einschluss eines von Null verschiedenen, vorzugsweise rechten, Winkels (α) zur Messachse (11) des ersten Maßstabes (10) geführt verschiebbar ist.

2. Messvorrichtung (1) nach Anspruch 1 **dadurch gekennzeichnet, dass** der zweite Maßstab (20) unter Beibehaltung der Verschiebbarkeit mit einem Haltemittel (40) an der Führungseinrichtung (30), insbesondere verliersicher, gelagert ist.

3. Messvorrichtung (1) nach Anspruch 1 oder 2, **dadurch gekennzeichnet, dass** der zweite Maßstab (20) zum Zerlegen der Messvorrichtung (1) vollständig der Führungseinrichtung (30) entnehmbar ist.

4. Messvorrichtung (1) nach einem der vorhergehenden Ansprüche, **dadurch gekennzeichnet, dass** die Führungseinrichtung (30) als eine parallel zur Messrichtung (22) des zweiten Maßstabes (20) vorlaufende Nut (31) im ersten Maßstab (10) ausgebildet ist, wobei vorzugsweise die Breite der Nut (31) im Wesentlichen der Breite des zweiten Maßstabes (10) und/oder die Tiefe der Nut (31) im Wesentlichen der Höhe des zweiten Maßstabes (10) entspricht.

5. Messvorrichtung (1) nach einem der vorhergehenden Ansprüche, **dadurch gekennzeichnet, dass** der erste Maßstab (10) an wenigstens einer Längskante (12, 13) zwei bezüglich der Führungseinrichtung (30) spiegelsymmetrische Längenskalen (14, 15) aufweist, deren jeweiliger Ursprung deckungsgleich mit dem Schnittpunkt (S1, S2) der wenigstens einen Längskante (12) mit einer der-Längskanten (22, 23) des zweiten Maßstabes (20) ist.

6. Messvorrichtung (1) nach einem der vorhergehenden Ansprüche, **dadurch gekennzeichnet, dass** die Messvorrichtung (1) mehrere Durchmesser-Lehren (51, 52, 53, 54), insbesondere zum Erfassen des Klobendurchmessers (D), aufweist.

7. Messvorrichtung (1) nach Anspruch 6, **dadurch gekennzeichnet**, die mehreren Durchmesser-Lehren (51, 52, 53, 54) am ersten Maßstab (10) und/oder am zweiten Maßstab (20), insbesondere drehbar und/oder auffächerbar, angeordnet sind.

8. Messvorrichtung (1) nach einem der vorhergehenden Ansprüche, **dadurch gekennzeichnet, dass** der erste Maßstab (10) und/oder der zweite Maßstab (20) linealförmig, insbesondere als Standardlineal, ausgebildet sind.

9. Messvorrichtung (1) nach einem der vorhergehenden Ansprüche, **dadurch gekennzeichnet, dass** der erste Maßstab (10) und/oder der zweite Maßstab (20) und/oder die mehreren Durchmesser-Lehren aus Metall, insbesondere aus Stahl, oder Aluminium, oder aus Kunststoff, insbesondere aus einem polymeren Kunststoff, bestehen.
